# EUROPEAN PATENT APPLICATION

(11) **EP 4 000 405 A1**
(43) Date of publication of application: **25.05.2022**
(21) Application number: 20208854.8
(22) Date of filing: 20.11.2020
(51) Int. Cl.: A23F 3/14, A23L 29/00, A23L 29/212, A23L 29/25, A23L 33/16, A23P 20/10

(54) **A ZINC FORTIFIED TEA COMPOSITION**

(71) Applicant: Unilever IP Holdings B.V., 3013 AL Rotterdam (NL)
(72) Inventor: The designation of the inventor has not yet been filed
(74) Representative: Mewburn Ellis LLP

(57) **Abstract**

The present invention relates to a tea composition. In particular, the present invention relates to a zinc fortified tea composition. Accordingly, the present invention provides a tea composition comprising;
a) a zinc compound;
b) a first polysaccharide selected from maltodextrin;
c) a second polysaccharide selected from gum arabic; and
d) a leaf tea product.

## Description

### Field of the Invention

The present invention relates to a tea composition. In particular, the present invention relates to a zinc fortified tea composition.

### Background and Prior Art

Tea is one of the most popular beverages in the world. It is believed that consumption of tea refreshes our mind. Polyphenols that are present in tea are also considered to be good for human health. There are varieties of tea available in the market, e.g. black tea, green tea, oolong tea, white tea, *etc.* Black tea is generally prepared by a process which includes the steps of withering, macerating, fermenting and firing/drying. On the other hand, green tea manufacturing process does not include the step of fermentation. Therefore, the characteristic profile of green tea is different from that of black tea.

Most of the people in Asian countries drinks tea at least twice a day or even more. Therefore, tea could be one of the ways of delivering nutrients and essentials elements.

In the present days zinc is considered to be one of the essential elements that has gained a lot of importance in the food industry. Zinc is believed to have immunity enhancing properties. It is believed that regular intake of zinc is having long term effect on the immunity of human body.

There are zinc supplements available in the market.

The present inventors have found that including zinc in a tea composition format is particularly problematic in terms of delivery of decent and controlled amount of zinc in every cup of brewed tea. Otherwise every different cup of brewed tea may end up with delivering varied amount of zinc. One cup may have more than 100% of RDA of zinc and another cup may have nothing substantial, this is not desirable.

The most suitable way is addressing this problem is to coat zinc on a tea leaf product. However, there are problem associated with coating processes e.g. most of the cases there are lumps formation. Moreover additives used during coating leads to unnatural appearance of the end product.

Therefore, a tea composition comprising zinc which is substantially free from lumps and with natural appearance, remains to be desired.

### Objects of the invention

In view of the foregoing, it is an object of the present invention to provide a tea composition comprising zinc.

It is another object of the present invention to provide a tea composition comprising zinc which is substantially free from lumps.

It is yet another object of the present invention to provide a tea composition comprising zinc which has an appearance of regular tea products.

The present inventors have surprisingly found that a particular selection of two polysaccharides in a selected ratio provide a zinc fortified tea composition without any non-natural appearance and thereby satisfying one or more of the above-mentioned objects.

### Summary of the invention

In a first aspect, the present invention provides a tea composition comprising;
a) a zinc compound;
b) a first polysaccharide selected from maltodextrin;
c) a second polysaccharide selected from gum arabic; and
d) a leaf tea product.

This and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples *per* se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The disclosure of the invention as found herein is to be considered to cover all embodiments as found in the claims as being multiply dependent upon each other irrespective of the fact that claims may be found without multiple dependency or redundancy.

Where a feature is disclosed with respect to a particular aspect of the invention (for example a composition of the invention), such disclosure is also to be considered to apply to any other aspect of the invention (for example a method of the invention) *mutatis mutandis.*

The present invention provides a tea composition comprising;
a) a zinc compound;
b) a first polysaccharide selected from maltodextrin;
c) a second polysaccharide selected from gum arabic; and
d) a leaf tea product.

The invention is about a zinc fortified tea composition. Any zinc compound which is having higher water solubility is suitable for this purpose of the present invention. Another preferred criterion for selection of the zinc compound for the present invention is the amount of zinc present in the zinc compound. The preferred zinc compound is selected from zinc sulphate, zinc citrate, zinc gluconate, zin glycinate, zinc EDTA and mixtures thereof. The most preferred zinc compound is selected from zinc sulphate, zinc citrate and zin glycinate.

The amount of zinc compound preferably in the range of 0.5 to 4 %, more preferably 1 to 3%, and most preferably 1.5 to 2% by weight of the composition.

The composition of the present invention also comprises two polysaccharides. The first polysaccharide is maltodextrin.

Maltodextrin is a very well-known food additive. It is a flavourless substance. It is generally produced from vegetable starch by hydrolysis. The starch is preferably corn or wheat. It is generally known to improve the mouthfeel of savouries.

The amount of maltodextrin used in the composition of the present invention is preferably in the range of 0.5 to 5%, more preferably 1 to 4%, furthermore preferably 2 to 4% and most preferably 2 to 3% by weight of the composition.

The composition of the present invention also comprises a second polysaccharides. The second polysaccharide is gum arabic. It is also commonly known as gum acacia. It is an edible water-soluble gum widely used in food industries as stabilizer and/or thickener.

The amount of gum arabic in the composition of the present invention preferably is in the range of 0.05 to 6%, more preferably 0.1 to 4%, further preferably 0.1 to 3% and most preferably 0.5 to 2% by weight.

The composition of the present invention comprises a leaf tea product. A leaf tea product preferably means a tea product which is obtained after the tea manufacturing processes and comprise less than 10%, preferably less than 7% and most preferably less than 5% moisture by weight of the leaf tea product.

The leaf tea product may preferably be selected from a black tea product, a green tea product, an oolong tea product, a white tea product or blends thereof.

Black tea generally refers to fermented tea and produced by processing fresh tea leaves. Fresh tea leaf refers to tea leaf, buds and/or stem that have never been dried to a water content of less than 30% by weight, and usually have moisture content in the range 60 to 90%. Black tea has different characteristics to green tea. Black tea is more astringent in taste and less bitter than green tea. The redness of black tea liquor is also significantly higher than that of green tea. Black tea also contains higher level of theaflavins.

In the process of black tea, fermentation refers to the oxidative and hydrolytic process that tea undergoes when certain endogenous enzymes and substrates are brought together, e.g. by mechanical disruption of the cells by maceration of the leaves. During this process, colourless catechins in the leaves are converted to a complex mixture of yellow and orange to dark-brown polyphenolic substances.

Green tea refers to substantially unfermented tea. Green tea has different characteristics than black tea. Green tea liquor is light in colour unlike black tea. Green tea also enriched with catechins and low or no amount of theaflavins.

Oolong tea refers to semi-fermented tea.

The preferred leaf tea product for the purpose of the present invention is either black tea or green tea, the most preferred is black tea.

The amount of leaf tea product in the composition is preferably in the range of 85 to 98.5%, more preferably 87 to 98.5%, furthermore preferably 90 to 98.5% and most preferably 92 to 98.5% by weight of the composition.

The composition as per the present invention may comprise further nutrients. The further nutrients may be selected from vitamin C, iron etc.

The present invention will now be demonstrated by way of non-limiting examples below. The examples are for illustration only and do not limit the scope of the invention in any manner.

### Examples:

### Preparation of different zinc fortified tea product

Different zinc fortified tea products were prepared using the processes as described below;

### Example A:

2g of Zinc Sulfate Heptahydrate was dissolved in 43g of distilled water (at 50°C) to prepare a coating solution. 98 g of black leaf tea (obtained from Kenya) was taken in a bowl and the coating solution was sprinkled on the tea and mixed thoroughly in a Hobart blender. Then this mixture was spread on a ceramic plate and kept for drying in a hot air oven at 80 °C. The dried tea was then used for further analysis.

### Example B:

2g of Zinc Sulfate Heptahydrate and 4g of gum arabic were dissolved in 43g of distilled water (at 50°C) to prepare a coating solution. 94g of black leaf tea (obtained from Kenya) was taken in a bowl and the coating solution was sprinkled on the tea and mixed thoroughly in a Hobart blender. Then this mixture was spread on a ceramic plate and kept for drying in a hot air oven at 80 °C. The dried tea was then used for further analysis.

### Example C:

2g of Zinc Sulfate Heptahydrate and 4g of maltodextrin were dissolved in 43g of distilled water (at 50°C) to prepare coating solution. 94g of black leaf tea (obtained from Kenya) was taken in a bowl and the coating solution was sprinkled on the tea and mixed thoroughly in a Hobart blender. Then this mixture was spread on a ceramic plate and kept for drying in a hot air oven at 80°C. The dried tea was then used for further analysis.

### Example D:

2g of Zinc Sulfate Heptahydrate, 4g of gum arabic and 6g of maltodextrin were dissolved in 43g of distilled water (at 50°C) to prepare coating solution. 88g of black leaf tea (obtained from Kenya) was taken in a bowl and the coating solution was sprinkled on the tea and mixed thoroughly in a Hobart blender. Then this mixture was spread on a ceramic plate and kept for drying in a hot air oven at 80 °C. The dried tea was then used for further analysis.

### Example E:

2g of Zinc Sulfate Heptahydrate, 8g of gum arabic and 3g of maltodextrin were dissolved in 43g of distilled water (at 50°C) to prepare coating solution. 87g of black leaf tea (obtained from Kenya) was taken in a bowl and the coating solution was sprinkled on the tea and mixed thoroughly in a Hobart blender. Then this mixture was spread on a ceramic plate and kept for drying in a hot air oven at 80 °C. The dried tea was then used for further analysis.

### Example 1:

2g of Zinc Sulfate Heptahydrate, 1g of gum arabic and 3g of maltodextrin were dissolved in 43g of distilled water (at 50°C) to prepare coating solution. 94g of black leaf tea (obtained from Kenya) was taken in a bowl and the coating solution was sprinkled on the tea and mixed thoroughly in a Hobart blender. Then this mixture was spread on a ceramic plate and kept for drying in a hot air oven at 80 °C. The dried tea was then used for further analysis.

For the above examples Zinc Sulfate Heptahydrate (Catalogue No: 1088830500) and Gum arabic (Catalogue No: 1042281000) were obtained from Merck ^{®} and Maltodextrin (Catalogue No: 419699-100G) was obtained from Sigma Aldrich.

After the above tea products were prepared, the C* value of each products was measured using the following protocol:
C* was measured using a Hunter lab Ultra scan Vis (Hunter lab Associates Laboratories Inc. Virginia) works on the measurement principle of Dual beam spectrophotometer. A pulsed xenon lamp was used as the light source. The illuminant used was D65 and the measurements were made at 10° Observer angle. Measurements were made using a quartz cuvette of 10 mm path length. The cuvette was filled up to the brim with leaf tea compositions as prepared above in the instrument for colour measurement. The instrument was calibrated using a standard white tile (Hunterlab Duffuse/8°, mode-RSIN/RSEX, Port-1" and area- large) in accordance with the instructions provided in the instruction manual. TTRAN mode is used for measuring infusion samples.

C* value represent the chroma value which is the appearance of the tea products (lighter or darker).

These C* values were compared with a standard black leaf tea product. For this purpose, the regular black tea product was the same black leaf tea product (obtained from Kenya) and used in the above examples.

The results are summarized below in Table 1

| Example No. | Surface Reflectance value (C*) |
|---|---|
| A | 1.66 |
| B | 1.36 |
| C | 1.73 |
| D | 1.27 |
| E | 1.41 |
| 1 | 3.52 |
| Regular Black leaf tea product | 3.29 |

From the above examples it is evident that the tea product within the scope of the present invention (Example 1) produce a fortified tea product which appears similar to a regular black tea product. However, the examples that are outside the scope of the present invention (Examples A to E) produces tea products that appears non natural compared to a regular black leaf tea product.

## Claims

**2.** A tea composition comprising;
a) a zinc compound;
b) a first polysaccharide selected from maltodextrin;
c) a second polysaccharide selected from gum arabic; and
d) a leaf tea product.

**3.** The composition according to claim 1 wherein the amount of zinc compound is in the range of 0.5 to 4 % by weight of the composition.

**4.** The composition according to any one of the preceding claims 1 or 2 wherein the zinc compound is selected from zinc sulphate, zinc citrate, zinc gluconate, zin glycinate, zinc EDTA and mixtures thereof.

**5.** The composition according to any one of the preceding claims wherein the zinc compound is zinc sulphate, zinc citrate and zin glycinate.

**6.** The composition according to claim 1 wherein the amount of maltodextrin is in the range of 0.5 to 5% by weight of the composition.

**7.** The composition according to claim 1 wherein the amount of gum arabic is in the range of 0.05 to 6% by weight.

**8.** The composition according to claim 1 wherein the leaf tea product is selected from a black tea product, a green tea product, an oolong tea product, a white tea product or blends thereof.

**9.** The composition according to claim 7 wherein the leaf tea product is a black tea product.

**10.** The composition according to any one of the preceding claims wherein the amount of leaf tea product in the composition is in the range of 85 to 98.5% by weight of the composition.

**11.** The composition as claimed in any one of the preceding claims may comprise further nutrients.
